# EUROPÄISCHE PATENTSCHRIFT

(11) **EP 2 156 150 B1**
(45) Veröffentlichungstag und Bekanntmachung des Hinweises auf die Patenterteilung: **13.03.2019**
(21) Anmeldenummer: 08735510.3
(22) Anmeldetag: 27.03.2008
(51) Int. Cl.: G01G 23/01, G01R 31/28

(54) **VERFAHREN ZUR ZUSTANDSÜBERWACHUNG EINER KRAFTMESSVORRICHTUNG, KRAFTMESSVORRICHTUNG UND KRAFTMESSMODUL**
METHOD FOR MONITORING THE STATE OF A FORCE MEASURING DEVICE, FORCE MEASURING DEVICE AND FORCE MEASURING MODULE
PROCÉDÉ POUR SURVEILLER L'ÉTAT D'UN DISPOSITIF DYNAMOMÉTRIQUE, DISPOSITIF DYNAMOMÉTRIQUE ET MODULE DYNAMOMÉTRIQUE

(30) Priorität: 07.06.2007 US 942475 P
(43) Veröffentlichungstag der Anmeldung: 24.02.2010
(73) Patentinhaber: Mettler-Toledo GmbH, 8606 Greifensee (CH)
(72) Erfinder: TRAUTWEILER, Christoph, CH-8105 Regensdorf (CH); BLISS, Douglas, Worthington, Ohio 43085 (US)
(74) Vertreter: Mettler-Toledo
(86) Internationale Anmeldenummer: PCT/EP2008/053622
(87) Internationale Veröffentlichungsnummer: WO 2008/148589

(56) Entgegenhaltungen:
- DE-A1-102004 001 909
- US-A1- 2003 164 711

## Beschreibung

Die vorliegende Erfindung betrifft ein Verfahren zur Überwachung und/oder zur Bestimmung des Zustandes einer Kraftmessvorrichtung, insbesondere einer Wägevorrichtung, sowie eine zur Ausführung des Verfahrens geeignete Kraftmessvorrichtung und ein zur Ausführung des Verfahrens geeignetes Kraftmessmodul.

Gemäss der Definition in dieser Schrift weist eine Kraftmessvorrichtung ein Kraftmessmodul und eine Anzeigevorrichtung auf. Das Kraftmessmodul wiederum weist zur Bestimmung einer Kraft eine mechanisch-elektrische Kraftmesszelle auf, die als Messgrössenumformer wirkt indem sie die Eingangsgrösse Kraft in ein elektrisches Ausgangssignal umformt. Eine besondere Form einer Kraftmessvorrichtung ist eine Waage mit einer oder mehreren Wägevorrichtungen, sogenannten Wägemodulen. In diesem Fall ist die Kraftmesszelle als Wägezelle ausgebildet und dient zur mechanisch-elektrischen Umformung der von einem Wägegut ausgeübten Gewichtskraft in ein elektrisches Signal. Insbesondere dient die Wägezelle einer Waage zur mechanisch-elektrischen Umformung der, von einem Wägegut ausgeübten Gewichtskraft in ein elektrisches Signal. Unter einem Kraftmessmodul oder einem Wägemodul ist eine Kraftmessvorrichtung beziehungsweise eine Waage ohne Anzeigevorrichtung zu verstehen.

Grössere Kraftmessvorrichtungen bestehen oftmals aus mehreren Kraftmessmodulen. Die zu messende Kraft wird dabei mit einer mechanischen Vorrichtung, insbesondere mit einer Messplatte oder durch Behälterfüsse, auf mehrere Kraftmessmodule aufgeteilt. Dabei weist jedes Kraftmessmodul jeweils eine Kraftmesszelle auf, mittels der der jeweilige Teil der einwirkenden Kraft individuell ermittelt werden kann. Die Ergebnisse der einzelnen Kraftmesszellen werden dann an eine gemeinsame Ausgabevorrichtung weitergeleitet und dort zu einem Gesamtergebnis zusammengefügt.

Beispielsweise werden Mehrfach-Kraftmessvorrichtungen in Industrieanlagen zur Verwiegung des Inhalts von Becken, Tanks, Reaktorbehältern und dergleichen verwendet. Typischerweise sind dabei die Wägemodule als Hochlast-Wägemodule, als sogenannte Tank- oder Reaktorbehälter-Wägezellen ausgebildet. Pro zu verwiegendem Behälter werden dann mehrere Wägemodule zwischen den Füssen des Behälters und dem Fundament angeordnet. Dadurch steht jeder Fuss des Behälters auf einem Kraftmessmodul. Um das Gewicht des Behälters und/oder dessen Inhalt zu ermitteln, müssen die, von den Kraftmessmodulen ermittelten Messwerte addiert werden, da es sich jeweils um die Messwerte von Teilmassen handelt. Diese Berechnung wird meist in einem benachbarten Terminal durchgeführt. Hochlast-Kraftmesszellen kommen auch als Wägemodule in Wägevorrichtungen für Lastwagen zum Einsatz. Dabei weisen diese typischerweise mehrere Messplatten oder Wägeplatten auf, welche jeweils durch mehrere Kraftmessmodule gestützt werden. Jedes Kraftmessmodul misst dementsprechend ein Teilgewicht des Lastwagens und/oder eines oder mehrerer Anhänger. Die Messergebnisse der einzelnen Kraftmessmodule werden an das Terminal übertragen und dort weiter verarbeitet. Typischerweise ist das Terminal in einer gewissen Distanz von den Kraftmessmodulen angeordnet, beispielsweise in einer bis zu einigen hundert Meter entfernten Kontrollvorrichtung.

US 2003/0164711 offenbart ein Signalverarbeitungssystem für das Ausgangssignal eines Sensors. Das Signalverarbeitungssystem weist eine Diagnose-Funktion auf zur Detektierung von Störungen. Die Diagnose-Funktion gibt kein zusätzliches Diagnosesignal aus, sondern im Falle einer Störung wird das Sensoraussgangssignal geändert. Durch zwei verschiedene definierte Spannungspegel gibt das Sensoraussganssignal darüber Auskunft, ob eine Störung getreten ist. Der Nachteil davon ist, dass nur zwei Arten von Störungen übermittelt werden können. Daher ist die Diagnose sehr beschränkt. Zudem betrifft die Diagnose nur die Signalverarbeitung und das Sensorausgangssignal. Dies bedeutet, Störungen die ausserhalb oder zwischen diesen Schaltungen treten nicht betrachtet werden. Daher ist dieses System für grössere Anlagen mit langer Verkabelung nicht geeignet. Gemäss der US 2004/0245026 ist das Terminal, das sogenannte Wägeterminal, mit einer Anzeige versehen mittels der die Ergebnisse der Kraftmessvorrichtung ausgegeben werden können. Ausserdem erbringt das Terminal die Stromversorgung der Kraftmessvorrichtung indem alle Kraftmessmodule über diese zentrale Stromversorgung mit Strom versorgt werden. Zur Übertragung der Messergebnisse und der Stromversorgung sind die Kraftmessmodule über diverse Kabel mit dem Terminal verbunden. Dabei werden sowohl die Stromversorgung als auch die Übertragung der Messwerte über die gleichen Kabel geführt.

Zur Verkabelung werden die einzelnen Kraftmessmodule jeweils über kürzere Verteilerleitungen mit einer Verteilvorrichtungen verbunden und lediglich diese Verteilvorrichtung wird über ein einzelnes Kabel, das sogenannte "home-run" Kabel, direkt mit dem Terminal verbunden. Die Stromversorgung und die Übertragung der Messwerte werden somit in der Verteilvorrichtung zusammengefasst um eine mehrfache parallele Verkabelung zu vermieden.

Die Verschaltung der Kraftmessmodule über Verteilerleitungen und Verteilvorrichtungen erhöht die Gefahr von Installationsfehlern beim Aufbau und führt zu einer schwierigen, langwierigen Fehler-Lokalisierung bei Reparaturen. Somit besteht die Anforderung, insbesondere bei grösseren Anlagen, an eine einfache und effiziente Überwachung des Zustandes der Kraftmessvorrichtung während Betrieb und Montage.

Aus der DE 101 50 641 ist eine Verteilvorrichtung bekannt, mit der die Zustände Spannungsversorgung, Schleifenstrom, Verpolung und Kabelbruch mit Hilfe von Leuchtdioden angezeigt werden. Diese Vorrichtung ermöglicht eine Fehlerdiagnose der wichtigsten Störungen, hat aber den Nachteil, dass die Anzeige keine genauen, quantifizierbaren Angaben über mögliche Fehlfunktionen liefert. Beispielsweise kann die Anzeige eine intakte Spannung der Stromversorgung signalisieren obwohl bereits Feuchtigkeit in das Gehäuse oder die Steckverbindung der Kabelverbindungen eingedrungen ist. So können dann Korrosionsprozesse einsetzen, die mit der Zeit zur völligen Zerstörung des Kraftmessmoduls führen obwohl keine Änderungen bei den Zuständen Spannungsversorgung, Schleifenstrom, Verpolung und Kabelbruch feststellbar ist.

Ein weiterer Nachteil ist, dass die Überwachung der optischen Anzeige am Ort der Messplatten durchgeführt werden muss. Das erfordert einen relativ grossen personellen Aufwand, insbesondere bei grossen Installationen und/oder bei unzugänglichen Verteilvorrichtungen.

Der vorliegenden Erfindung liegt daher die Aufgabe zugrunde, ein Verfahren zur Bestimmung des Zustandes einer Kraftmessvorrichtung, eine geeignete Kraftmessvorrichtung und ein geeignetes Kraftmessmodul, insbesondere eine Wägevorrichtung und ein Wägemodul, anzugeben, mit welchen der Zustand der Kraftmessvorrichtung genauer und einfacher bestimmt werden kann.

Diese Aufgabe wird mit einem Verfahren zur Zustandsüberwachung einer Kraftmessvorrichtung, einer Kraftmessvorrichtung und einem Kraftmessmodul gelöst, welche die in den unabhängigen Ansprüchen angegebenen Merkmale aufweisen. Vorteilhafte Ausgestaltungen der Erfindung sind in weiteren, abhängigen Ansprüchen angegeben.

Die Erfindung betrifft ein Verfahren zur Zustandsbestimmung einer Kraftmessvorrichtung, insbesondere einer Wägevorrichtung, mit mindestens einem, eine Kraftmesszelle und ein Kommunikationsmittel aufweisendes Kraftmessmodul, mit einem Terminal und mit mindestens einer Kommunikationsleitung, über welche Kommunikationssignale zwischen dem Kommunikationsmittel und dem Terminal übertragbar sind. Dabei wird während des Betriebs der Kraftmessvorrichtung die elektrische Spannung der mindestens einen Kommunikationsleitung mit einem Spannungssensor mindestens einmal gemessen und dadurch mindestens ein Messwert erzeugt wird, der mindestens eine Messwert und/oder dessen verarbeitete Ergebnisse über die mindestens eine Kommunikationsleitung an das Terminal und/oder an das Kommunikationsmittel eines weiteres Kraftmessmoduls übertragen, und daraus ein Parameter des Zustandes der Kraftmessvorrichtung bestimmt. Da diese Spannungswerte der Kommunikationsleitungen sehr empfindlich auf Störungen reagieren, können die Störungsursachen sehr genau ermittelt werden. Ausserdem werden die Messwerte im Terminal zusammengeführt und ermöglichen dadurch eine vergleichende Auswertung der Messwerte zu aussagekräftigen Ergebnissen und/oder eine komplexe, vielschichtige Zustandsanalyse. Somit kann der Zustand der Kraftmessvorrichtung sehr genau bestimmt werden, insbesondere erlaubt das erfindungsgemässe Verfahren nicht nur Aussagen zur Fehlerdiagnose sondern auch Prognosen über den zu erwartenden, zukünftigen Verlauf des Zustandes. Dadurch wird die Planung von Wartungs- und Unterhaltsarbeiten wesentlich erleichtert. Da die Messwerte und/oder dessen verarbeitete Ergebnisse an das Terminal übermittelt und dort zentral gesammelt und verarbeitet werden, kann daher die Zustandsüberwachung auf einfache Weise durchgeführt werden.

Der Spannungssensor der Kraftmessvorrichtung und/oder des Kraftmessmoduls sind derart ausgestaltet, dass die Spannung der mindestens einen Kommunikationsleitung während des Betriebs messbar ist. Das erlaubt eine ständige, unterbrechungsfreie Überwachung des Zustandes der Kraftmessvorrichtung.

Der ermittelte Messwert kann als analoger Wert, beispielsweise als elektrische Spannung, oder in digitaler Form, beispielsweise als Zahlenwert, vorliegen. Ferner umfasst der Begriff Messwert auch den zeitlich kontinuierlichen Verlauf einer Messung, das sogenannte Messsignal. Dieses Messsignal kann dann ebenfalls in analoger Form, beispielsweise als Signalverlauf, oder in digitaler Form, beispielsweise als Zeitreihe, vorliegen.

In einer weiteren Ausgestaltung der Erfindung werden die Kommunikationssignale mittels eines Bussystems, insbesondere mittels eines CAN-Bussystems, übertragen. Bei einem Bussystem sind die Kommunikationsmittel und das Terminal permanent mit einer gemeinsamen Kommunikationsleitung verbunden und das Senden und Empfangen der Kommunikationssignale erfolgt über eine Kommunikationssteuerung. Dadurch kann der Verkablungsaufwand sehr gering gehalten werden. Insbesondere werden beim CAN-Bussystem die Kommunikationssignale über mindestens zwei Kommunikationsleitungen übertragen. Der CAN-Bus ist ein weit verbreiteter Industriestandard und bietet den Vorteil eines standardisierten, stabilen und kostengünstigen Aufbaus.

In einer weiteren Ausgestaltung der Erfindung wird während des Betriebs ein Messintervall vorgesehen, während dem die Kommunikation zwischen dem Terminal und dem Kommunikationsmittel und/oder zwischen den Kommunikationsmittel mindestens zweier Kraftmessmodule unterbrochen und die elektrische Spannung gemessen wird. Durch diese zeitliche Trennung von Kommunikationssignalen und Messungen können gegenseitige Störung vermieden werden.

In einer weiteren Ausgestaltung der Erfindung wird während des Messens der elektrischen Spannung die Kommunikationsleitung mit mindestens einer Testspannung beaufschlagt. Durch das Anlegen der Testspannung wird eine definierte Änderung der Spannungen auf der Kommunikationsleitung erzeugt, was eine genauere Interpretation der Messwerte und damit eine verbesserte Zustandsbestimmung gestattet.

Die Testspannung kann durch das Terminal und/oder durch das Kommunikationsmittel, gegebenenfalls gesteuert durch das Terminal, auf die Kommunikationsleitung aufgebracht werden. Somit kann das erfindungsgemässe Verfahren auch in den Fällen angewendet werden, bei denen eine Verbindung zwischen dem Terminal und dem Kommunikationsmittel beeinträchtigt, gestört oder unterbrochen ist.

In einer weiteren, erfindungsgemässen Ausgestaltung wird eine aufgetretene oder eine zu erwartende Fehlfunktion des mindestens einen Kraftmessmoduls, insbesondere das Auftreten eines Kurzschlusses, durch das Kommunikationsmittel erkannt, daraufhin das Kommunikationsmittel von der Kommunikationsleitung getrennt und die Bestimmung des Messergebnisses mit geschätzten und/oder interpolierten und/oder oder extrapolierten Messwerten, gegebenenfalls mit Ausgabe eines Warnhinweises, durchführt. So kann das Wägen mit reduzierter Genauigkeit fortgesetzt werden. Je nach Genauigkeitsanforderungen und Bedeutung des ausgefallenen Kraftmessmoduls können die Ergebnisse noch eine genügend hohe Genauigkeit aufweisen.

Vorzugsweise wird durch das Terminal oder durch das Kommunikationsmittel das Messverfahren koordiniert, insbesondere werden dass durch das Terminal oder durch das Kommunikationsmittel Steuerbefehle für den Zeitpunkt zum Anhalten der Kommunikationssignale und/oder für den Zeitpunkt zum Anlegen einer Testspannung und/oder zum Messen der Spannung der mindestens einen Kommunikationsleitung und/oder für den Zeitpunkt zum Fortsetzen der Kommunikationssignale und/oder zur Übermittelung der Messwerte und/oder dessen verarbeitete Ergebnisse erzeugt. Somit wird die gesamte zeitliche Steuerung des erfindungsgemässen Verfahrens durch das Terminal synchronisiert.

In einer weiteren Ausgestaltung der Erfindung werden die positive Spannung und/oder die negativen Spannung der Kommunikationsleitung bezüglich eines Potentials, insbesondere eines Erdpotentials gemessen. Dadurch können zusätzliche Informationen über die Veränderungen der Spannungspotentiale gewonnen werden, welche das Erkennen der vernetzten Anordnung der Kraftmessvorrichtung ermöglichen und die Genauigkeit der Zustandsbestimmung verbessern.

In einer weiteren Ausgestaltung der Erfindung wird die Spannung der Kommunikationsleitung überwacht, insbesondere werden der mindestens eine Messwert und/oder dessen verarbeitete Ergebnisse auf Einhaltung von mindestens einem veränderbar vordefinierten Schwellwert überprüft und bei Überschreitungen des mindestens einen Schwellwerts werden Aktionen ausgelöst, insbesondere das Übertragen von Meldungen und/oder die Neukalibrierung und/oder die Abschaltung des betreffenden Kraftmessmoduls und/oder die Speicherung des mindestens einen Messwerts und/oder dessen verarbeitete Ergebnisse in einer Speichereinheit. Durch diese Diagnosefunktion kann eine nachträgliche Rückverfolgbarkeit der Messung und diesbezüglicher Ereignisse erreicht werden. Ausserdem kann die Datenübertragung zum Terminal stark reduziert, da nur Daten zu den entscheidenden Ereignissen kommuniziert werden.

Die Schwellwerte können mittels theoretischer Berechnungen, insbesondere unter Berücksichtigung der Leitungswiderstände der Verbindungen, der Innenwiderstände der Kommunikationsmittel und der Abschlusswiderstände und/oder mittels mindestens einer Referenzmessung bestimmt werden. Die Werte der Referenzmessungen können vorzugsweise durch Messungen an einer neu errichteten und/oder neu kalibrierten Kraftmessvorrichtung gewonnen und in einer Speichereinheit gespeichert werden. Die Referenzwerte und/oder Schwellwerte können aber auch aus Handbüchern und Anleitungen entnommen werden. Zudem können diese auch vom Hersteller vorgegeben oder bei Bedarf vom Hersteller an die Anlage übermittelt werden. Besonders vorteilhaft ist die Speicherung der Referenzwerte und/oder der Schwellwerte in den einzelnen Kraftmessmodulen, dadurch kann eine modulare Austauschbarkeit der Module erreicht werden.

Diese Ausgestaltung der Erfindung eignet sich bei einfachen, übersichtlichen Anordnungen der Kraftmessmodule, da sich dann die Schwellwerte auf einfache Weise ermitteln lassen. Falls in einer weiteren Ausgestaltung der Erfindung alle Modulverbindungskabel einen weitgehend identischen Leitungswiderstand, insbesondere weitgehend identische Länge, Materialien und Leitungsquerschnitte aufweisen, können die theoretischen Sollwerte und Schwellwerte auf besonders einfache Weise bestimmt werden.

In einer erfindungsgemässen Ausgestaltung wird beim Kommunikationsmittel mit einer Schaltvorrichtung zwischen mindestens einem Generator für ein Kommunikationssignal, insbesondere einem CAN-Controller, und mindestens einem Generator für mindestens eine Testspannung umgeschaltet werden. Somit wird eine Umschaltung mit minimalem Aufwand erreicht, insbesondere dann, wenn die Funktion der Schaltvorrichtung durch einen Mikroprozessor, beispielsweise die Steuereinheit des Kommunikationsmittels übernommen wird.

Ferner kann das Kraftmessmodul jeweils eine Vorrichtung zur Bestimmung und/oder Überwachung der elektrischen Spannung der Stromversorgung, insbesondere der positiven Spannung und/oder der negativen Spannung aufweisen. Diese Spannung kann gegebenenfalls auf ein gemeinsames Potential, insbesondere ein Erdpotential (GND), bezogen sein. Aus diesen Spannungswerten können wertvolle, zusätzliche Informationen über den Zustand der Kraftmessvorrichtung gewonnen werden.

In einer weiteren Ausgestaltung der Erfindung werden mindestens zwei Kraftmessmodule mittels eines, der Weiterleitung der Kommunikation dienenden Modulverbindungskabels direkt miteinander verbunden. Dadurch kann die Gesamtlänge der benötigten Verbindungskabel deutlich reduziert und die Stabilität der Kraftmessvorrichtung erhöht werden.

In einer bevorzugten Ausgestaltung weist das Kraftmessmodul eine Recheneinheit und eine Speichereinheit auf, in welcher Recheneinheit ein Programm ausgeführt wird, welches den Wert der ermittelten Spannung mit mindestens einem in der Speichereinheit und/oder der Recheneinheit veränderbar vordefinierten Schwellwert vergleicht. Ausserdem weist das Kraftmessmodul vorzugsweise eine Speichereinheit auf, mittels der der ermittelte Messwert und/oder dessen verarbeitete Ergebnisse zur weiteren Verarbeitung abgelegt werden können.

In der Kraftmessvorrichtung ist bevorzugter Weise ein Zeitgeber vorhanden, wobei die Recheneinheit auf diesen zugreifen kann und das Programm jedem ermittelten Wert, einen Zeitwert zuordnen kann und das Wertepaar in der Speichereinheit ablegen kann. Damit ist eine Rückverfolgbarkeit hinsichtlich potenziell störender Ereignisse möglich und im Falle des Auswertens einer zeitlichen Abfolge von Spannungswerten, beispielsweise durch einen Servicetechniker, eine Rückverfolgbarkeit möglich wird und Aufschluss über die Umgebung der Kraftmessvorrichtung erhalten werden kann und gegebenenfalls Massnahmen zur Beseitigung von Störungen eingeleitet werden können.

Unter dem Begriff Recheneinheit werden alle signalverarbeitenden Elemente wie analoge Schaltkreise, digitale Schaltkreise, integrierte Schaltkreise, Prozessoren, Computer und dergleichen verstanden, die die durch den Sensor generierten Sensorsignale mit bereits in der Recheneinheit gespeicherten oder eingestellten Werten vergleicht. Diese Werte, insbesondere Maximalwerte, Schwellwerte und Benutzungsgrenzwerte können aus Regelwerken wie nationalen oder internationalen Normen stammen, aus Vergleichsmessungen ermittelt oder vom Hersteller der Kraftmessvorrichtung festgelegt worden sein. Dabei kann die Kraftmessvorrichtung bei Bedarf auch mehrere Recheneinheiten aufweisen, beispielsweise kann für jeden eingebauten Sensor eine eigene Recheneinheit vorhanden sein.

Weist die Kraftmessvorrichtung eine Ausgabeeinheit, insbesondere einen Bildschirm einer Anzeige- und Bedieneinheit und/oder mindestens eine Leuchtdiode und/oder einen Drucker auf, besteht ein bevorzugter Verfahrensschritt, darin ein von der ermittelten Spannung abhängiges Signal an der Ausgabeeinheit auszugeben. Somit ist ein Benutzer der Kraftmessvorrichtung stets über die Umgebungsbedingungen hinsichtlich Störungen der Spannungen informiert.

Der Begriff Ausgabeeinheit steht für alle analog beziehungsweise digital arbeitenden Übermittlungs-, Melde- und Warnsysteme die geeignet sind, die durch den Sensor erzeugten Messwerte und/oder Sensorsignale und/oder ein Ausgangssignal der Recheneinheit durch geeignete Mittel wie Ton, Licht, Vibrationen, elektrische Signale, elektromagnetische Impulse, numerische Ausgaben und dergleichen mehr darzustellen oder an weitere Geräte, beispielsweise weitere Ausgaben, Leitsysteme, Terminals und dergleichen zu übermitteln. Die Ausgabe kann deshalb auch ein Transponder oder Transmitter sein, welcher die Sensorsignale und/oder Ausgangssignale beispielsweise an ein portables Gerät sendet. Mittels der Ausgabeeinheit kann eine Warnung an den Benutzer ausgegeben, das Ereignis an eine Speichereinheit weitergesendet oder sogar der Hersteller oder dessen Servicestelle beispielsweise über Internetverbindungen direkt alarmiert werden.

Im Fall des Überschreitens des mindestens einen Schwellwerts erfolgt zunächst eine oder mehrere Wiederholungen der Messung, dies insbesondere dann, wenn die Kraftmessvorrichtung beziehungsweise eine mit ihr verbundene Recheneinheit den Wert der Spannung als die Stabilität des Messsignals beeinflussend einstuft. Alternativ oder gleichzeitig kann eine Alarmierung ausgelöst werden und/oder ein Messvorgang unterbrochen und/oder blockiert werden. Auch das Löschen einer Bereitschaftsanzeige ist eine mögliche Aktion der Messelektronik beziehungsweise der Kraftmessvorrichtung. Es ist von besonderem Vorteil hinsichtlich einer Rückverfolgbarkeit den Wert der Spannung zusammen mit einem Zeitwert in ein Logfile der Speichereinheit abzulegen.

Steht bei kalibrierfähigen Kraftmessvorrichtungen, insbesondere bei Waagen, eine Kalibrierung an, so ist bei Überschreiten des Schwellwerts diese zum betreffenden Zeitpunkt nicht auszuführen sondern diese wird erst nach einem anschliessenden Unterschreiten des Schwellwerts durchgeführt.

In einem vorteilhaften Schritt des Verfahrens wird zur Kontrolle des mindestens einen Sensors dessen an die Recheneinheit übermittelten Messwerte oder Sensorsignale zumindest periodisch in der Recheneinheit durch einen Vergleich mit in der Speichereinheit gespeicherten Verifizierungswerten und Verifizierungstoleranzwerten überprüft. Bei Abweichung von diesen Verifizierungswerten oder beim Verletzen von vorgegebenen Verifizierungstoleranzwerten wird ein Fehler registriert und an eine Ausgabeeinheit übermittelt. Dies erhöht die Sicherheit des Verfahrens.

Einzelheiten der erfindungsgemässen Kraftmessvorrichtung, des erfindungsgemässen Kraftmessmoduls und des erfindungsgemässen Verfahrens ergeben sich anhand der Beschreibung der in den Zeichnungen dargestellten Ausführungsbeispiele. Es zeigen:
- Fig. 1: in schematischer Darstellung einer Kraftmessvorrichtung mit einem Kraftmessmodul im Schnitt, welche jeweils eine Kraftmesszelle und ein Kommunikationsmittel aufweist und welches über eine Kommunikationsleitung mit einem Terminal verbunden sind;
- Fig. 2: in schematischer Darstellung eine erfindungsgemässe Ausgestaltung des Kommunikationsmittels mit Spannungssensor, wobei die Kommunikationsleitung in 2a als eine einfache Zweidraht Verbindung und in 2b als eine CAN-Bus Verbindung mit Umschaltvorrichtung dargestellt ist;
- Fig. 3: in vereinfachter, beispielhafter Darstellung den zeitlichen Verlauf der Signalspannung gemäss des erfindungsgemässen Verfahrens, wobei in 3a der Verlauf der beaufschlagten Spannung, in 3b der Signalverlauf beim Spannungssensor und in 3c die Zeitabschnitte der Kommunikation, das Messintervall und die Messzeitpunkte dargestellt sind;
- Fig. 4: in vereinfachter Darstellung eine weitere Ausführung des erfindungsgemässen Verfahrens gemäss Figur 3, jedoch mit einer Kommunikation über eine CAN-Bus Verbindung, wobei in 4a der Verlauf der beiden beaufschlagten Spannungen, in 4b der Signalverlauf der beiden Kommunikationsleitungen beim Spannungssensor dargestellt ist;
- Fig. 5: das vereinfachte Schaltschema der erfindungsgemässen Kraftmessvorrichtung mit einem Terminal, 1 bis n reihenförmig verbundenen Kraftmessmodulen, Leitungswiderständen, Terminierungswiderständen, elektrischen Spannungen und einer Erdung;
- Fig. 6: das vereinfachte Schema der erfindungsgemässen Kraftmessvorrichtung mit einem Terminal, 1 bis n verbundenen Kraftmessmodulen, wobei jeweils ein Modul als Master wirkt, in Figur 6a das zweite Modul und in Figur 6c das n-te Modul.

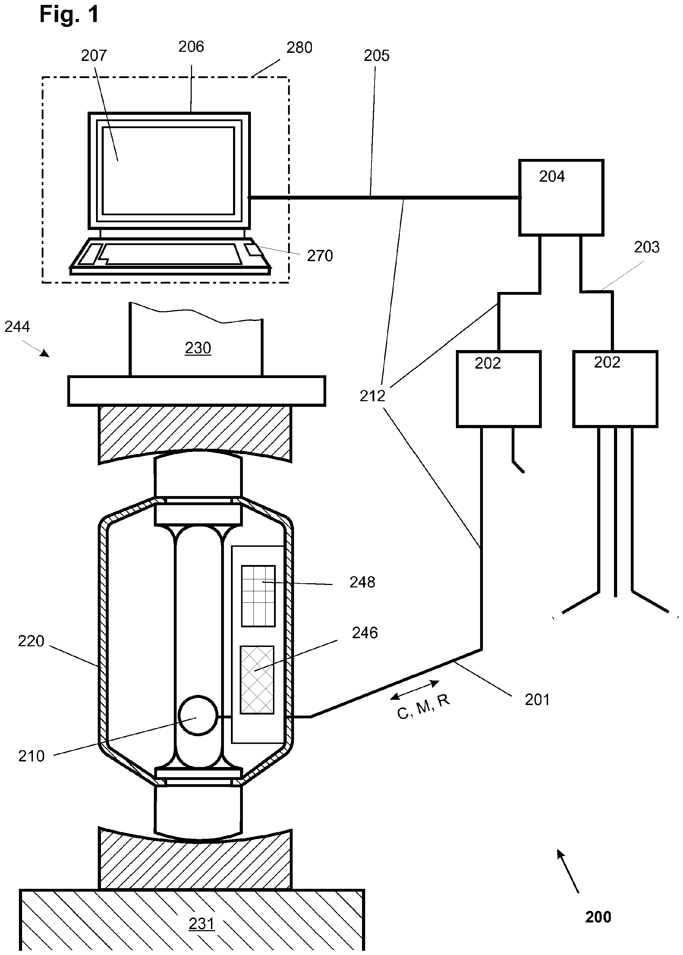

Figur 1 zeigt eine erfindungsgemässe Kraftmessvorrichtung 200 in Form einer Tanklast-Wägevorrichtung. Pro zu verwiegendem Behälter werden mehrere Kraftmessmodule 244 zwischen den Füssen des Behälters 230 und dem Fundament 231 angeordnet um zu erreichen, dass jeder Fuss des Behälters 230 auf einem Kraftmessmodule 244 steht. Um das Gewicht des Behälters und/oder dessen Inhalt zu ermitteln, müssen die von den Kraftmessmodulen 244 erzeugten Messwerte addiert werden, da es sich um Messwerte von Teilmassen handelt. Dazu werden die Messwerte der einzelnen Kraftmessmodule 244 an ein Terminal 206 übermittelt, dort ausgewertet und auf der Ausgabe 207 dargestellt. Das Terminal 206 ist in einer distanziert platzierten Kontrollvorrichtung 280 angeordnet.

Das Kraftmessmodul 244 weist eine Kraftmesszelle 210 auf, welche von einem Gehäuse 220 umschlossen ist. Das Gehäuse 220 ist in der Regel mit der Kraftmesszelle 210 verschweisst und gegenüber der Umgebung der Kraftmessvorrichtung 200 dicht verschlossen. Im Messeinsatz wird sowohl die Kraftmesszelle 210 als auch das Gehäuse 220 elastisch gestaucht. Die Deformation der Kraftmesszelle 210 wird mittels der Kraftmesszelle 210 gemessen und die Messwerte oder deren verarbeitete Resultate einem Kommunikationsmittel 248 zugeführt.

Die Stromversorgung des Kraftmessmoduls 244, insbesondere der zugehörigen Elektronik, der Kraftmesszelle 210 und des Kommunikationsmittels 248, wird durch ein Stromzufuhrmittel 246 ermöglicht, welches seinerseits mit dem Strom P versorgt wird.

Jedes Kraftmessmodul 244 ist über eine Verteilerleitung 201 an eine Verteilvorrichtung 202 angeschlossen. Die Verteilvorrichtung 202 ist dann ihrerseits über ein Segmentkabel 203 mit einem Segmentkoppler 204 verbunden. Schliesslich ist der Segmentkoppler 204 über ein Terminalkabel 205 mit der Kontrollvorrichtung 280 verbunden. Das Terminalkabel 205, das sogenannte "Home-run Kabel", überbrückt die oftmals grössere Distanz zwischen dem Segmentkoppler 204 und Kontrollvorrichtung 280 stellt somit die unmittelbare Verbindung zur Terminal 280 her. Der Segmentkoppler 204 koppelt zwei unabhängige, physisch getrennte Segmente der Kraftmessvorrichtung 200 zusammen. Ein Segment wird jeweils durch eine Messplatte 240, die zugehörigen Kraftmessmodule 244, die Verteilleitungen 201, die Verteilvorrichtung 202 und das Segmentkabel 203 gebildet.

Diese Stromversorgungseinheit 270 der Kraftmessvorrichtung 200 ist in der Kontrollvorrichtung 280 angeordnet und in das Terminal 206 integriert. Die Verteilung des Stroms erfolgt über das Terminalkabel 205, den Segmentkoppler 204, das Segmentkabel 203, die Verteilvorrichtung 202 und schliesslich über die Verteilleitung 201 als Strom P an das Stromzufuhrmittel 246 der einzelnen Kraftmessmodule 244.

In gleicher Weise ist auch das Kommunikationsmittel 248 des Kraftmessmoduls 244 mit dem Terminal 206 verbunden um die Kommunikation C, verarbeitete Resultate R und Messwerte M zu übermitteln. Die Messwerte werden jedoch in entgegen gesetzter Richtung zur Stromversorgung übertragen, also vom Kommunikationsmittel 248, über die Verteilleitung 201, die Verteilvorrichtung 202, das Segmentkabel 203, den Segmentkoppler 204, das Terminalkabel 205 zum Terminal 206 in der Kontrollvorrichtung 280. Die Verteilleitung 201, das Segmentkabel 203 und das Terminalkabel 205 werden zusammengefasst als Kommunikationsleitung 212 bezeichnet.

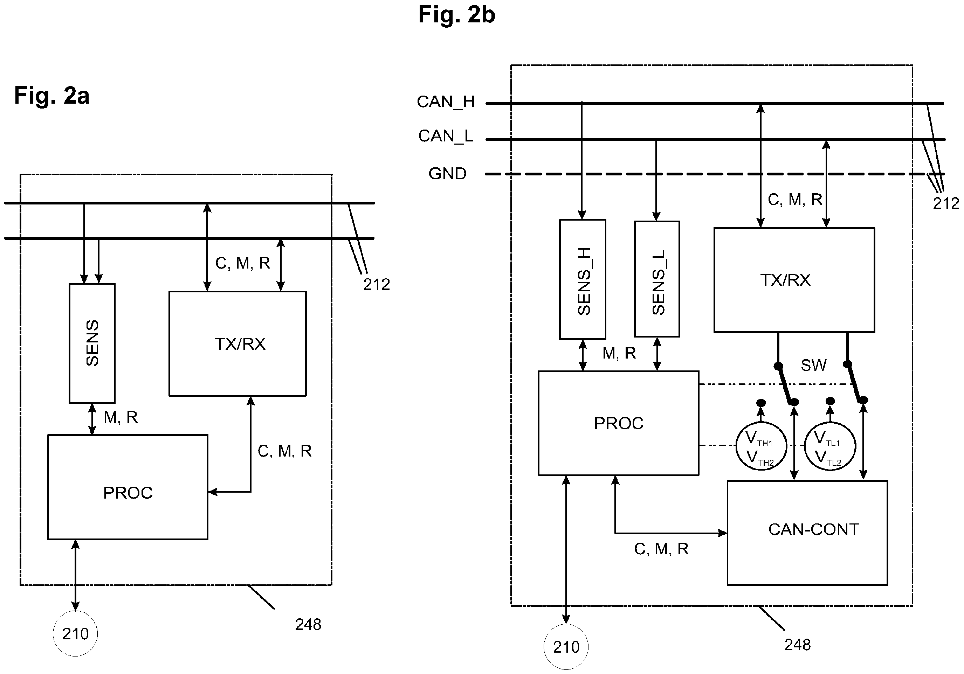

Als mögliche Ausführungsbeispiele der Erfindung sind in Figur 2a eine einfache Zweidraht Verbindung und in Figur 2b eine CAN-Bus Verbindung dargestellt. Selbstverständlich sind auch viele weitere Möglichkeiten der Übertragung denkbar, insbesondere Modulationsverfahren mit Messungen der Trägersignalen oder Messungen der Signalstärke bei optischen Signalübertragungen.

Die Übertragung der Messwerte M und/oder der deren verarbeitete Ergebnisse R an das Terminal 206 kann entweder zeitlich versetzt, über die zu messende Kommunikationsleitung 212 oder gleichzeitig, während der Messung über eine eigene Kommunikationsleitung 212, eine Funkverbindung oder optische Verbindung an das Terminal 206 übertragen werden.

Figur 2a zeigt in schematischer Darstellung eine erfindungsgemässe Ausgestaltung des Kommunikationsmittels 248 mit einem Spannungssensor SENS welcher der Messung der Spannung V_{S} zwischen den Kommunikationsleitungen 212 dient. Statt der Differenz der Kommunikationsleitungen 212 kann aber auch die Potentialdifferenz zwischen der Kommunikationsleitung 212 und einem Erdpotential gemessen werden.

Der Spannungssensor SENS ist mit einer Steuereinheit PROC verbunden sodass Steuerbefehle und Messwerte M verarbeitete Resultate R zwischen diesen ausgetauscht werden können. Dabei kann der Sensor beispielsweise als Messvorrichtung zur Bestimmung eines Spannungsabfalls über einem Widerstand ausgestaltet sein.

Ferner ist die Steuereinheit PROC mit der Kraftmesszelle verbunden um ebenfalls Steuerbefehle und Messwerte bezüglich der Kraftmessungen auszutauschen. Ausserdem ist die Steuereinheit PROC mit einer Sende- und Empfangseinheit, einem sogenannten Transceiver TX/RX verbunden, um über die, an den Transceiver TX/RX angeschlossene Kommunikationsleitung 212 Signale der Kommunikation C, insbesondere Messwerte M und/oder deren verarbeitete Resultate R an das Terminal 206 zu senden und/oder um Steuerbefehle von dem Terminal 206 zu empfangen.

Figur 2b zeigt in analoger Darstellung wie Figur 2a eine erfindungsgemässe Ausgestaltung des Kommunikationsmittels 248 mit zwei Spannungssensoren SENS_H, SENS_L welcher der Messung der Spannung V_{SH} und V_{SL} zwischen verschiedenen Leitungen CAN_H und CAN_L der Kommunikationsleitung 212 und dem Erdpotential GND dient. Statt dem Erdpotential GND kann aber auch nur die Potentialdifferenz zwischen Leitungen CAN_H und CAN_L gemessen werden, allerdings können dadurch gewisse Informationen verloren gehen, die für die Bestimmung des Zustandes der Kraftmessvorrichtung 200 relevant sein können.

In analoger Weise zu Figur 2a sind die Spannungssensoren SENS_H, SENS_L mit einer Steuereinheit PROC verbunden. Zur Kommunikation der Messwerte und/oder deren verarbeiteten Resultate ist zusätzlich ein Kontroller CAN-CONT an die Steuereinheit PROC angeschlossen. Somit läuft die Kommunikation stets über diesen Kontroller CAN-CONT und erst dann über den Transceiver TX/RX und die Kommunikationsleitung 212 an das Terminal 206.

Ausserdem weist das Kommunikationsmittels 248 ein, von der Steuereinheit PROC gesteuertes Schaltelement SW auf, mit der die Signalzufuhr des Transceivers TX/RX umgeschaltet werden kann. Dadurch kann zwischen dem Kontroller CAN-CONT und Generatoren der Testspannungen V_{T} umgeschaltet werden. Die Testspannungen V_{T} sind vorzugsweise konstant und die Generatoren können die Testspannungen V_{T}, gesteuert durch die Steuereinheit PROC, zu verschiedenen Zeitpunkten mit verschiedenen Spannungswerten, beispielsweise V_{TH1}, V_{TH2}, V_{TL1}, und V_{TL2} erzeugen. Das Schaltelement SW kann auf vielfältige Weise ausgebildet sein, beispielsweise als Schalter, als Relais, als Gatter oder als Mikroprozessor oder als Teil der genannten Schaltelemente, insbesondere als Port eines Mikroprozessors.

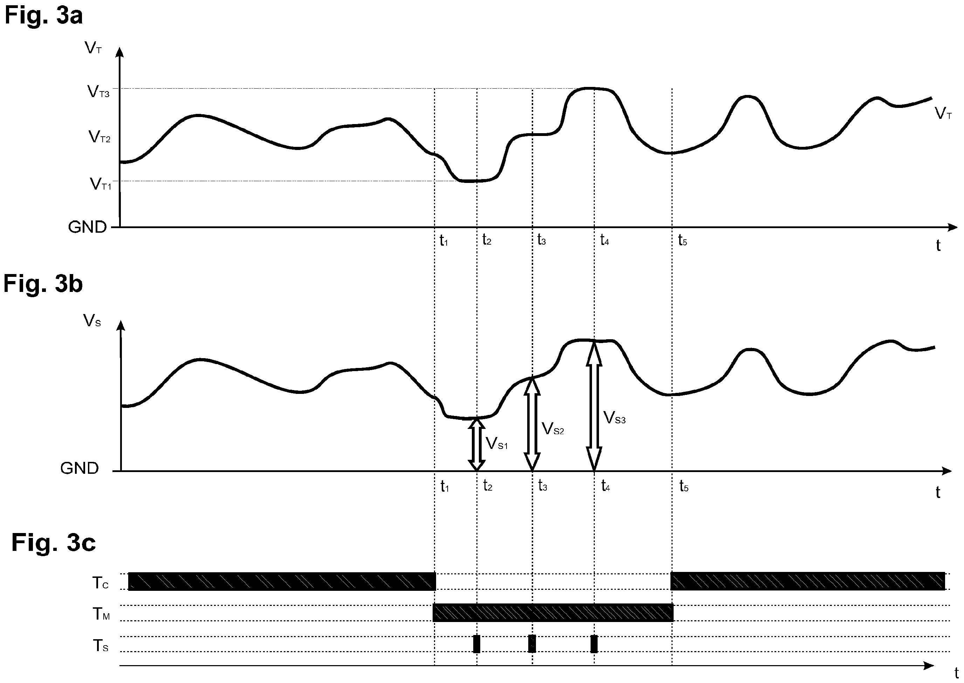

Figur 3 zeigt in vereinfachter Darstellung das Verfahren zur Spannungsmessung bezüglich der Zeitachse t mit einem Kommunikationsmittels 248 gemäss Figur 2a. Dabei stellt Figur 3a einen beispielhaften Verlauf der Spannung V_{T} am Terminal 206 bezüglich eines Erdpotentials GND, Figur 3b einen beispielhaften Verlauf der Spannung V_{S} am Kommunikationsmittel 248 bezüglich eines Erdpotentials GND und Figur 3c die Zeitabschnitte der Kommunikation T_{C}, des Messintervalls T_{M} und die Messzeitpunkte T_{S} dar.

Die Messungen des Spannungssensors SENS werden durch Steuerbefehl der Steuereinheit PROC ausgelöst und die ermittelten Messwerte vom Sensor SENS wieder der Steuereinheit PROC zugeführt. Dabei können die einzelnen Messzeitpunkte durch das Terminal 206 an die Steuereinheit PROC während einer Kommunikationsphase übermittelt werden. Die Messwerte des Spannungssensors und/oder deren verarbeitete Resultate können, gegebenenfalls zusammen mit weiteren Daten, über den Transceiver TX/RX und die Kommunikationsleitung 212 an das Terminal 206 übertragen werden.

In einer ersten Phase werden Steuerinformationen während der Kommunikationszeit T_{C} vom Terminal 206 an die Kommunikationsmittel 248 kommuniziert. Somit können bestimmte Zeitpunkte t₁, t₂, t₃, t₄ und t₅ für alle Kraftmessmodule 244 synchron definiert werden. Beispielsweise können die Steuerinformationen bedeuten, dass alle Kommunikationsmittel 248 zehn Sekunden nach Empfang der Steuerinformation den Zeitpunkt t₁, drei Sekunden später den Zeitpunkt t₂, zwei Sekunden später den Zeitpunkt t₃, etc. festzulegen haben. Es ist aber auch denkbar, das die Zeitpunkte t₁, t₂, t₃, t₄ und t₅ durch andere Formen der Synchronisation, beispielsweise durch kohärente Taktgeber, separate Synchronisationsleitungen oder abgestimmte Zeitgeber realisiert werden.

Zum Zeitpunkt t₁ wird der Zeitabschnitte der Kommunikation T_{K} unterbrochen und ein Messintervall T_{M} begonnen. Somit wird der Verlauf der Spannung am Kommunikationsmittel 248 während dem Messintervall T_{M} nicht als Signal einer Kommunikation sondern als Testspannung V_{T} erfasst.

In der Ausführung gemäss Figur 3 wird zu den Messzeitpunkten t₂, t₃ und t₄, welche durch die Zeitpunkte T_{S} zusammengefasst sind, die Kommunikationsleitung 205 durch das Terminal 206 mit drei definierten Testspannungen V_{T1}, V_{T2} und V_{T3} beaufschlagt. Dabei wird die Spannung zu den Messzeitpunkten T_{S} weitgehend konstant gehalten, während die Spannung zwischen den Messzeitpunkten T_{S} beliebige Werte, insbesondere beliebige Übergangsspannungen annehmen kann. Vorzugsweise sind diese Testspannungen V_{T1}, V_{T2} und V_{T3} unterschiedlich und decken möglichst den gesamten Spannungsbereich der Kommunikationssignale ab.

Die Messungen des Spannungssensors SENS zu den Messzeitpunkten t₂, t₃ und t₄ beziehungsweise T_{S} werden durch Steuerbefehle der Steuereinheit PROC ausgelöst. Die vom Spannungssensor SENS ermittelten Messwerte der Spannungen V_{S1}, V_{S2} und V_{S3} und/oder deren verarbeitete Resultate werden anschliessend vom Spannungssensor SENS an die Steuereinheit PROC übermittelt. Schliesslich werden die gemessenen Werte und/oder deren verarbeitete Resultate nach Abschluss des Messintervalls T_{M}, also nach dem Zeitpunkt t₅, während der Kommunikationsphase T_{K} über die Kommunikationsleitung 205 an das Terminal 206 übertragen und daraus der Zustand der Kraftmessvorrichtung 200 bestimmt.

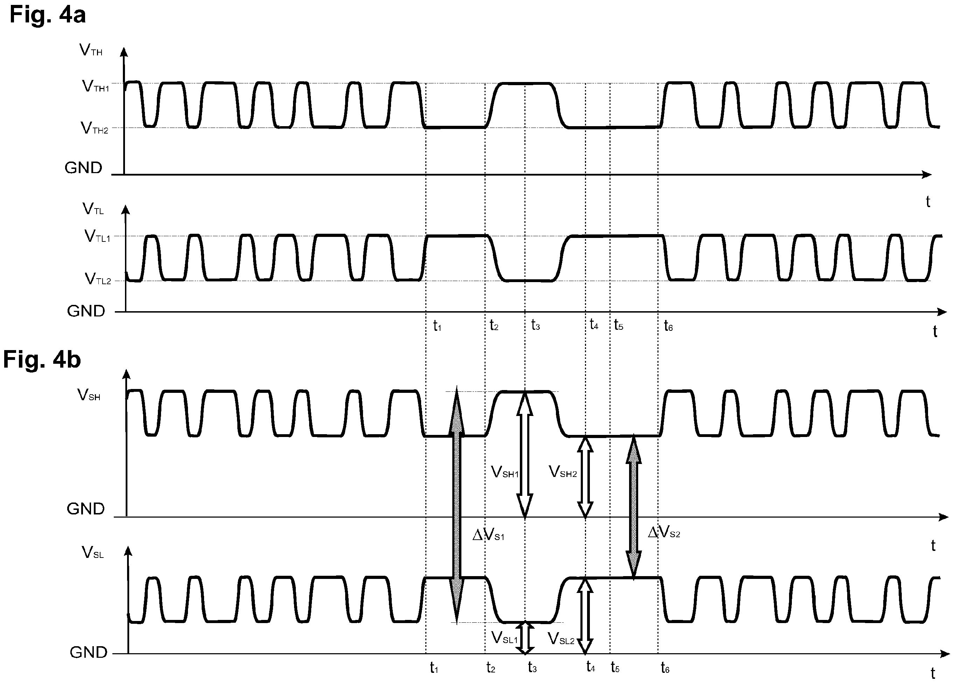

Eine weitere Ausgestaltung der erfindungsgemässen Kraftmessvorrichtung 200 ist in Figur 4 dargestellt. Die Darstellung entspricht jener in Figur 3, ausser, dass in diesem Fall die Kommunikation als Datenübertragung über einen CAN-Bus mit den zwei Kommunikationsleitung CAN_H und CAN_L statt findet.

Figur 4a zeigt einen beispielhaften Verlauf der Spannung V_{TH} der Kommunikationsleitung CAN_H und einen beispielhaften Verlauf der Spannung V_{TL} der Kommunikationsleitung CAN_L, jeweils bezüglich eines Erdpotentials GND. Diese Verläufe können durch das Terminal 206 aber auch durch das Kommunikationsmittel 248 eines beliebigen Kraftmessmoduls beaufschlagt werden. Im letzteren Fall werden die Spannungsquellen V_{TH} und V_{TL} durch das Schaltelement SW des Kommunikationsmittels 248 zugeschaltet. In der gezeigten Ausführung werden die Messungen zu den Zeitpunkten t₃ und t₄ durchgeführt. Dazu werden während des Zeitpunkts t₃ die Spannung V_{TH1} auf die Kommunikationsleitung CAN_H und die Spannung V_{TL1} auf die Kommunikationsleitung CAN_L und während des Zeitpunkts t₄ die Spannung V_{TH2} auf die Kommunikationsleitung CAN_H und die Spannung V_{TL2} auf die Kommunikationsleitung CAN_L gelegt.

Figur 4b zeigt, einen beispielhaften Verlauf der Spannung V_{SH} auf der Kommunikationsleitung CAN_H und einen beispielhaften Verlauf der Spannung V_{SL} auf der Kommunikationsleitung CAN_L, jeweils bezüglich eines Erdpotentials GND bei einem Kommunikationsmittel 248 eines weiteren Kraftmessmoduls 244. Die Messwerte der Spannungen, die sie von den Sensoren SENS_H und SENS_L ermittelt werden, ergeben V_{SH2} auf der Kommunikationsleitung CAN_H und V_{SL2} auf der Kommunikationsleitung CAN_L zum Messzeitpunkt t₂ und V_{SH3} auf der Kommunikationsleitung CAN_H und V_{SL3} auf der Kommunikationsleitung CAN_L zum Messzeitpunkt t₃, jeweils bezüglich des Erdpotentials GND (weisse Pfeile). Wie oben beschrieben sind auch Messungen ohne Bezug auf das Erdpotential möglich, indem direkt die Potentialdifferenz zwischen den Kommunikationsleitung CAN_H und CAN_L gemessen wird, also ΔV_{S2} zum Messzeitpunkt t₂ und ΔV_{S3} zum Messzeitpunkt t₃ (graue Pfeile). Entsprechend dem Verfahren wie anhand Figur 3b beschrieben, werden die Messwerte und/oder deren verarbeitete Resultate nach Abschluss des Messintervalls T_{M}, also nach dem Zeitpunkt t₅, während der Kommunikationsphase T_{C} über die Kommunikationsleitung 212 an das Terminal 206 übertragen daraus der Zustand der Kraftmessvorrichtung 200 bestimmt.

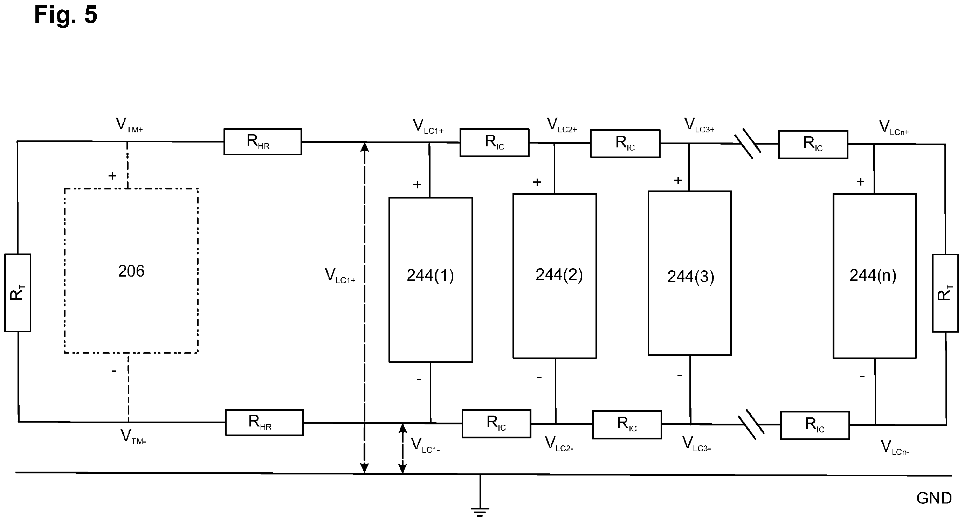

Figur 5 zeigt ein vereinfachtes Schaltschema einer Kraftmessvorrichtung 200, mit einem Terminal 206 und 1 bis n Kraftmessmodulen 244(1) ... 244(n), welche reihenförmig miteinander verbunden sind und somit eine Kette bilden. Die Leitungswiderständen R_{HR} und R_{IC} repräsentieren den Leitungswiderstand des Terminalkabels 205 und R_{IC} den Leitungswiderstand des Modulverbindungskabels 250. Die Terminierungswiderstände R_{T} wirken als Abschluss der Kommunikationsleitungen 212, was besonders bei einer busförmigen Ausgestaltung der Kommunikationsleitung 212 vorteilhaft ist. Ausserdem sind die elektrischen Spannungen V_{LC1+}, ..., V_{LCn+}, V_{LC1-}, ..., V_{LCn-} der Kommunikationsmittel 248, die elektrische Spannungen V_{TM+}, V_{TM-} am Terminal 206 und einer gemeinsamen Erdung GND dargstellt.

Die Leitungswiderstande R_{HR}, R_{IC} sind durch die Leitungswiderstände R_{HR} des Terminalkabels 205 und der Leitungswiderstände R_{IC} des Modulverbindungskabels 250 gegeben. Dementsprechend kann bei jedem Kraftmessmodul 244(i), 1 ≤ i ≤ n eine positive Spannung V_{LCi+} und eine negative Spannung V_{LCi-} der Kommunikationsleitungen 212 bezüglich des gemeinsamen Erdpotentials gemessen werden. Diese Spannungen sind charakteristisch für jedes einzelne der Kraftmessmodule 244(1) ... 244(n). Das Erdpotential ist durch die Ummantelung der Kabel und/oder der Kraftmessmodule 244(1) ... 244(n) und insbesondere durch die Erdung der gesamten Kraftmessvorrichtung 200 gegeben.

Vorzugsweise werden die gemessen Spannungen V_{LC1+}, ..., V_{LCn+}, V_{LC1-}, ..., V_{LCn-} mit erwarteten Werten oder mit Schwellwerten verglichen. Beim Überschreiten dieser Werte werden entsprechende Meldungen an das Terminal kommuniziert. Das Terminal kann entsprechende Aktionen auslösen wie das Alarmieren, das Informieren, das Warnen des Benutzers oder das Korrigieren der Messwerte oder das Kalibrieren oder das Justieren der Messvorrichtung.

In dieser Ausgestaltung der Erfindung sind die Leitungswiderstände R_{IC} der Modulverbindungskabel 250 jeweils weitgehend identisch. Das kann durch geeignete Wahl der Länge, Materialien und Leitungsquerschnitt der einzelnen Leitungen im Modulverbindungskabel 250 erreicht werden. Auf diese Weise können die zu erwartenden Werte und die entsprechenden Schwellwerte der Spannung V_{LC1+}, ..., V_{LCn+}, V_{LC1-}, ..., V_{LCn-} auf einfache Weise berechnet werden. Ebenso werden weitgehend identische Leitungswiderstände R_{HR} des Terminalkabels 205 durch geeignete Wahl der Leitungen des Terminalkabels 205 erreicht. Eine Berechnung der zu erwartenden Werte und Schwellwerte kann aber auch ohne weiteres für beliebige Leitungswiderstände durchgeführt werden.

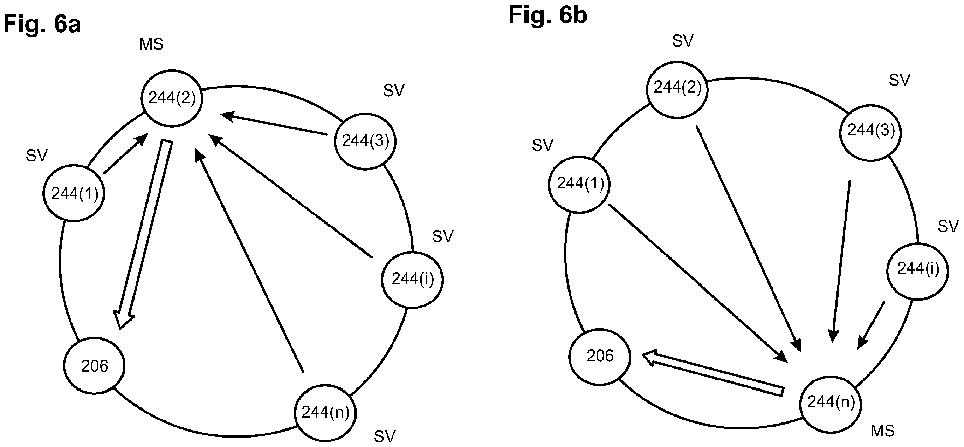

Figur 6 zeigt ein vereinfachtes Schema der erfindungsgemässen Kraftmessvorrichtung mit einem Terminal 206 und 1 bis n miteinander verbundenen Kraftmessmodulen 244. In dieser Anordnung wirkt ein Kraftmessmodulen 244 als Master MS und die anderen (n-1) Kraftmessmodulen 244 als Slave SV. Während einer Testphase T_{M} beaufschlagt der Master MS, auf die Kommunikationsleitungen 212 mit einer oder mehrere Testspannungen V_{T}. Die Spannung V_{S} an Kraftmessmodulen 244 wird von den Slaves SV gemessen und später, während einer Kommunikationsphase T_{C}, an das Terminal 206 oder an den Master MS übermittelt (schwarzer Pfeil). In Figur 6a wirkt das zweite Kraftmessmodul 244 und in Figur 6c das n-te Kraftmessmodul 244 als Master MS, während die anderen Kraftmessmodule 244 jeweils als Slave SV wirken. Jedes Kraftmessmodul 244 kann, typischerweise gesteuert durch das Terminal 206, die Funktion als Master MS übernehmen. Die gesammelten und gegebenenfalls verarbeiteten Messwerte werden dann vom Master MS an das Terminal 206 übermittelt (weisser Pfeil). Ferner kann auch das Terminal 206 selbst die Funktion als Slave SV übernehmen, indem es die Spannungen V_{TM} am Terminal 206 misst und die Messwerte an den Master MS übermittelt.

Bei den erfindungsgemässen Ausgestaltungen kann, je nach Konfiguration der Kraftmessvorrichtung 200 und des Terminals 206, das Kommunikationsmittel 248 selbständig kontinuierlich oder periodisch und/oder zufällig oder nach Auftreten einer Veränderung entsprechende Informationen an das Terminal 206 übermitteln. Selbstverständlich kann auch das Terminal 206 Informationen, wie Messwerte oder Messergebnisse bei den Kommunikationsmittel 248 kontinuierlich, periodisch oder nach dem Zufallsprinzip abrufen.

Die erfindungsgemässe Vorrichtung kann mittels zentralisierten und/oder dezentralisierten Teilen einer Steuervorrichtung einer Anlage, beispielsweise mit dem Terminal 206 und/oder der Verbindungseinheit 201 und/oder dem Kraftmessmodul 244 durchgeführt werden, die dazu mit den entsprechenden Betriebsprogrammen versehen sind. Möglich ist jedoch auch eine Aufgabenteilung zwischen den verschiedenen Ebenen der Prozesssteuerung. Durch geeignete Massnahmen kann das erfindungsgemässe Verfahren somit auf beliebigen ein- oder mehrstufigen Anlagen mit geringem Aufwand implementiert werden. Terminal 206 und/oder Verbindungseinheit 201 können auch in einem mobilen Gerät eingebaut sein, mit dessen Hilfe die einzelnen Messwerte und/oder Messergebnisse über Funkverbindungen abgefragt werden. Dazu können die einzelnen Kraftmessmodule 244 über einen Identifikationscode verfügen, wie dies im Stand der Technik für viele Anwendungen bekannt ist und verwendet wird.

Die Ausführungsbeispiele in der Beschreibung sollen nicht dahingehend verstanden werden, dass die vorliegende Erfindung auf die Anordnung von nur einer Kraftmesszelle in nur einem Kraftmessmodul limitiert ist. Es liegt im Verständnis des Fachmannes, die Erfindung ebenso in Anordnungen anzuwenden, die mindestens zwei Wägezellen in einem Kraftmessmodul beinhalten.

Des Weiteren spielt die Koordination von Messungen und Warnungen im Bezug auf den Erfindungsgegenstand keine Rolle. Sowohl Meldungen / Warnungen in "Echtzeit" als auch Meldungen / Warnungen zeitlich zu den Messungen versetzt sind möglich.

### Bezugszeichenliste

- 200: Kraftmessvorrichtung
- 201: Verteilkabel
- 202: Verteilvorrichtung
- 203: Segmentkabel
- 204: Segmentkoppler
- 205: Terminalkabel
- 206: Terminal
- 207: Anzeige
- 210: Kraftmesszelle
- 212: Kommunikationsleitung
- 220: Gehäuse
- 230: Behälterfuss
- 231: Fundament
- 240: Messplatte
- 244: Kraftmessmodul
- 246: Stromzufuhrmittel
- 248: Kommunikationsmittel
- 250: Modulverbindungskabel
- 270: Stromversorgungseinheit
- 280: Kontrollvorrichtung
- C: Kommunikationssignal
- M: Messwert
- R: Messergebnis
- GND: Erdpotential
- V_{T}, V_{T1}, V_{T2}, V_{T3}, V_{TH}, V_{TH1}, V_{TH2}, V_{TL}, V_{TL1}, V_{TL2}: Testspannung
- V_{S}, V_{S1}, V_{S2}, V_{S3}, V_{SH}, V_{SH1}, V_{SH2}, V_{SL}, V_{SL1}, V_{SL2}: Spannung am Sensor
- ΔV_{S1}, ΔV_{S2}: Spannungsdifferenz
- V_{TM+}, V_{TM-}: Spannung am Terminal
- V_{LCi+}, V_{LCi-}: Spannung an Kraftmessmodul
- R_{HR}, R_{IC}: Leitungswiderstand
- R_{T}: Terminierungswiderstand
- t: Zeit
- t₁, t₂, t₃, t₄, t₅: Zeitpunkt
- T_{C}: Zeitabschnitt zur Kommunikation
- T_{M}: Messintervall
- T_{S}: Messzeitpunkt
- MS: Master
- SV: Slave
- SW: Schaltelement

## Patentansprüche

1. Verfahren zur Zustandsbestimmung einer Kraftmessvorrichtung (200), insbesondere einer Wägevorrichtung, mit mindestens einem, eine Kraftmesszelle (210) und ein Kommunikationsmittel (248) aufweisendes Kraftmessmodul (244), mit einem Terminal (206) und mit mindestens einer Kommunikationsleitung (212), über welche Kommunikationssignale (C) zwischen dem Kommunikationsmittel (248) und dem Terminal (206) übertragbar ist, **dadurch gekennzeichnet, dass** während des Betriebs der Kraftmessvorrichtung (200) die elektrische Spannung (V_{S}) der mindestens einen Kommunikationsleitung (212) mit einem Spannungssensor (SENS) mindestens einmal gemessen und dadurch mindestens ein Messwert (M) erzeugt wird, dass der mindestens eine Messwert (M) und/oder dessen verarbeitete Ergebnisse (R) über die mindestens eine Kommunikationsleitung (212) an das Terminal (206) und/oder an das Kommunikationsmittel (248) eines weiteres Kraftmessmoduls (244) übertragen, und dass daraus ein Parameter des Zustandes der Kraftmessvorrichtung (200) bestimmt wird.

2. Verfahren nach Anspruch 1, **dadurch gekennzeichnet, dass** die Kommunikationssignale (C) mittels eines Bussystems, insbesondere mittels eines CAN-Bussystems, übertragen werden.

3. Verfahren nach Anspruch 1 oder 2, **dadurch gekennzeichnet, dass** während des Betriebs ein Messintervall (T_{M}) vorgesehen wird, während dem die Kommunikation (C) zwischen dem Terminal (206) und dem Kommunikationsmittel (248) und/oder zwischen den Kommunikationsmittel (248) mindestens zweier Kraftmessmodule (244) unterbrochen und die elektrische Spannung (V_{S}) gemessen wird.

4. Verfahren nach einem der Ansprüche 2 bis 3, **dadurch gekennzeichnet, dass** während des Messens der elektrischen Spannung (V_{S}) die Kommunikationsleitung (212) mit mindestens einer Testspannung (V_{T}) beaufschlagt wird.

5. Verfahren nach einem der Ansprüche 1 bis 4, **dadurch gekennzeichnet, dass** eine Testspannung (V_{T}) durch das Terminal (206) und/oder durch das Kommunikationsmittel (248), gegebenenfalls gesteuert durch das Terminal (206), auf die Kommunikationsleitung (212) aufgebracht wird.

6. Verfahren nach einem der Ansprüche 1 bis 5, **dadurch gekennzeichnet, dass** eine aufgetretene oder eine zu erwartende Fehlfunktion des mindestens einen Kraftmessmoduls (244), insbesondere das Auftreten eines Kurzschlusses, durch das Kommunikationsmittel (248) erkannt wird, dass daraufhin das Kommunikationsmittel (248) von der Kommunikationsleitung (212) getrennt und die Bestimmung des Messergebnisses mit geschätzten und/oder interpolierten und/oder oder extrapolierten Messwerten, gegebenenfalls mit Ausgabe eines Warnhinweises, durchführt wird.

7. Verfahren nach einem der Ansprüche 1 bis 6, **dadurch gekennzeichnet, dass** durch das Terminal (206) oder durch das Kommunikationsmittel (248) das Messverfahren koordiniert wird, insbesondere dass durch das Terminal (206) oder durch das Kommunikationsmittel (248) Steuerbefehle für den Zeitpunkt (t₁) zum Anhalten der Kommunikationssignale (C) und/oder für den Zeitpunkt (t₂, t₃, t₄) zum Anlegen einer Testspannung (V_{T}) und/oder zum Messen der Spannung (V_{S}) der mindestens einen Kommunikationsleitung (212) und/oder für den Zeitpunkt (t₅) zum Fortsetzen der Kommunikationssignale (C) und/oder zur Übermittelung der Messwerte (M) und/oder dessen verarbeitete Ergebnisse (R) erzeugt werden.

8. Verfahren nach einem der Ansprüche 1 bis 7, **dadurch gekennzeichnet, dass** die Spannung (V_{S}) der Kommunikationsleitung (212) überwacht wird, insbesondere dass der Messwert (M) und/oder dessen verarbeitete Ergebnisse (R) auf Einhaltung von mindestens einem veränderbar vordefinierten Schwellwert überprüft wird und bei Überschreitungen des mindestens einen Schwellwerts Aktionen, insbesondere das Übertragen von Meldungen und/oder die Neukalibrierung und/oder die Abschaltung des betreffenden Kraftmessmoduls (244) und/oder die Speicherung des mindestens einen Messwerts (M) und/oder dessen verarbeitete Ergebnisse (R) in einer Speichereinheit, ausgelöst werden.

9. Verfahren nach Anspruch 8, **dadurch gekennzeichnet, dass** die Schwellwerte mittels theoretischen Berechnungen, insbesondere unter Berücksichtigung der Leitungswiderstände der Verbindungen (R_{HR}, R_{IC}), der Innenwiderstände der Kommunikationsmittel und der Abschlusswiderstände (R_{T}) und/oder mittels mindestens einer Referenzmessung bestimmt werden.

10. Verfahren nach einem der Ansprüche 1 bis 9, **dadurch gekennzeichnet, dass** beim Kommunikationsmittel (248) mit einer Schaltvorrichtung SW zwischen einem Generator für ein Kommunikationssignal, insbesondere einem CAN-Controller (CAN-CONT), und einem Generator für mindestens eine Testspannung (V_{T}) umgeschaltet wird.

11. Kraftmessvorrichtung (200), insbesondere eine Wägevorrichtung, mit einem, eine Kraftmesszelle (210) und ein Kommunikationsmittel (248) aufweisenden Kraftmessmodul (244), mit einem Terminal (206) und mindestens einer Kommunikationsleitung (212), über welche Kommunikationssignale C zwischen dem Kommunikationsmittel (248) und dem Terminal (206) übertragbar sind, **dadurch gekennzeichnet, dass** das Kraftmessmodul (244) einen Spannungssensor (SENS) aufweist, mit welchem die elektrische Spannung (V_{S}) der mindestens einen Kommunikationsleitung (212) während des Betriebs messbar ist, dass der mindestens eine Messwert und/oder dessen Auswertungen über die mindestens eine Kommunikationsleitung (212) an das Terminal (206) übertragbar sind, und dass daraus der Zustand der Kraftmessvorrichtung (200) bestimmbar ist.

12. Kraftmessvorrichtung (200) nach Anspruch 11, **dadurch gekennzeichnet, dass** mindestens zwei Kommunikationsleitungen (212) zwischen dem Terminal (206) und dem Kommunikationsmittel (248) vorhanden sind, welche als Bussystem, insbesondere als Kommunikationsleitungen (CAN_H, CAN_L) für ein CAN-Bussystem, ausgebildet sind.

13. Kraftmessvorrichtung (200) nach Anspruch 11 oder 12, **dadurch gekennzeichnet, dass** mindestens zwei Kraftmessmodule (244) mittels eines, der Weiterleitung der Kommunikation dienenden Modulverbindungskabels direkt miteinander verbunden sind.

14. Kraftmessvorrichtung (200) nach einem der Ansprüche 11 bis 13, **dadurch gekennzeichnet, dass** das Kraftmessmodul (244) jeweils eine Vorrichtung zur Bestimmung und/oder Überwachung der elektrischen Spannung der Stromversorgung, insbesondere der positiven Spannung (V_{S+}) und/oder der negativen Spannung (V_{S-}), gegebenenfalls bezogen auf ein gemeinsames Potential, insbesondere ein Erdpotential (GND), aufweisen.

15. Kraftmessvorrichtung (200) nach einem der Ansprüche 11 bis 14, **dadurch gekennzeichnet, dass** alle Modulverbindungskabel einen weitgehend identischen Leitungswiderstand (R_{IC}), insbesondere weitgehend identische Länge, Materialien und Leitungsquerschnitte aufweisen.

16. Kraftmessvorrichtung (200) nach einem der Ansprüche 11 bis 15, **dadurch gekennzeichnet, dass** beim Kommunikationsmittel (248) eine Schaltvorrichtung (SW) vorhanden ist, mit welcher zwischen mindestens einem Generator für ein Kommunikationssignal, insbesondere einem CAN-Controller (CAN-CONT), und mindestens einem Generator für mindestens eine Testspannung (V_{T}) umschaltbar ist.

## Claims

1. A method for determining the status of a force measuring device (200), particularly a weighing device, with at least one force measuring module (244) having a force measuring cell (210) and a communication means (248), with a terminal (206), and with at least one communication line (212) via which communication signals (C) are transmittable between the communication means (248) und the terminal (206), **characterized in that**, during operation of the force measuring device (200), the electrical voltage (Vs) of the at least one communication line (212) is measured at least once by means of a voltage sensor (SENS), thereby generating at least one measurement value (M), **in that** the at least one measurement value (M) and/or processed results (R) thereof are transmitted via the at least one communication line (212) to the terminal (206) and/or to the communication means (248) of another force measuring module (244), and **in that** a parameter of the status of the force measuring device (200) is determined therefrom.

2. The method according to claim 1, **characterized in that** the communication signals (C) are transmitted by means of a bus system, particularly by means of a CAN bus system.

3. The method according to claim 1 or 2, **characterized in that**, during operation, a measuring interval (T_{M}) is provided, during which communication (C) is interrupted between the terminal (206) und the communication means (248) and/or between the communication means (248) of at least two force measuring modules (244) and the electrical voltage (Vs) is measured.

4. The method according to claim 2 or 3, **characterized in that** at least one test voltage (V_{T}) is applied to the communication line (212) during measurement of the electric voltage (Vs).

5. The method according to any of claims 1 to 4, **characterized in that** a test voltage (V_{T}) is applied to the communication line (212) from the terminal (206) and/or from the communication means (248), optionally controlled by the terminal (206).

6. The method according to any of claims 1 to 5, **characterized in that** an occurred or expected malfunction of the at least one force measuring module (244), in particular the occurrence of a short circuit, is recognized by the communication means (248), **in that** subsequently the communication means (248) is disconnected from the communication line (212) and the determination of the measuring result is performed using estimated and/or interpolated and/or extrapolated measures, optionally including an output of a warning signal.

7. The method according to any of claims 1 to 6, **characterized in that** the measuring method is coordinated via the terminal (206) or via the communication means (248), in particular **in that** the terminal (206) or the communication means (248) generate control commands for the time (t₁) to stop the communication signals (C) and/or for the time (t₂, t₃, t₄) for applying the test voltage (V_{T}) and/or for measuring the voltage (Vs) of the at least one communication line (212) and/or for the time (t5) to continue the communication signals (C) and/or for transmitting the measurement values (M) and/or the processed results (R) thereof.

8. The Method according to any of claims 1 to 7, **characterized in that** the voltage (Vs) of the communication line (212) is monitored, in particular **in that** the measurement value (M) and/or the processed results (R) thereof is examined regarding the compliance with at least one changeably predetermined threshold and **in that**, in case of exceedances of the at least one threshold, actions are triggered, in particular the transmission of notifications and/or the recalibration and/or shutdown of the force measuring module (244) concerned and/or the storage of the at least one measurement value (M) and/or the processed results (R) thereof in a storage unit.

9. The Method according to claim 8, **characterized in that** the thresholds are determined by means of theoretical calculations, in particular considering the line resistances of the connections (R_{HR}, R_{IC}), the internal resistances of the communication means and the connection resistances (R_{T}), and/or by means of at least one reference measurement.

10. The Method according to any of claims 1 to 9, **characterized in that**, within the communications means (248), a switching device, SW, is used for switching between a generator for a communications signal, in particular a CAN controller (CAN-CONT), and a generator for at least one test voltage (V_{T}).

11. A force measuring device (200), in particular a weighing device, with a force measuring module (244) having a force measuring cell (210) und a communication means (248), with a terminal (206) and at least one communication line (212) via which communication signals, C, are transmittable between the communication means (248) and the terminal (206), **characterized in that** the force measuring module (244) has a voltage sensor (SENS) with which the electrical voltage (Vs) of the at least one communication line (212) is measurable during operation, **in that** the at least one measure and/or evaluations thereof are transmittable to the terminal (206) via the at least one communication line (212), and **in that** the status of the force measuring device (200) is determinable therefrom.

12. The force measuring device (200) according to claim 11, **characterized in that** there are at least two communication lines (212) between the terminal (206) and the communication means (248), which are formed as a bus system, in particular as communication lines (CAN_H, CAN_L) for a CAN bus system.

13. The force measuring device (200) according to claim 11 or 12, **characterized in that** at least two force measuring modules (244) are directly interconnected by means of a module connection cable arranged to forward the communication.

14. The force measuring device (200) according to any of claims 11 to 13, **characterized in that** the force measuring module (244) each have a device for determining and/or monitoring the electrical voltage of the current supply, in particular of the positive voltage (Vs+) and/or the negative voltage (V_{S-}), optionally with respect to a common potential, in particular a ground potential (GND).

15. The force measuring device (200) according to any of claims 11 to 14, **characterized in that** all module connection cables have a substantially identical power resistance (R_{IC}), in particular a substantially identical length, materials und line cross sections.

16. The force measuring device (200) according to any of claims 11 to 15, **characterized in that** there is a switching device (SW) within the communication means (248) by means of which it is possible to switch between at least one generator for a communication signal, in particular a CAN controller (CAN-CONT) and at least one generator for at least one test voltage (V_{T}).

## Revendications

1. Procédé pour la détermination de l'état d'un dispositif de mesure de force (200), en particulier d'un dispositif de pesage, avec au moins un module de mesure de force (244) comprenant une cellule de mesure de force (210) et un moyen de communication (248), avec un terminal (206) et avec au moins une ligne de communication (212), par laquelle des signaux de communication (C) peuvent être transmis entre le moyen de communication (248) et le terminal (206), **caractérisé en ce que** pendant le fonctionnement du dispositif de mesure de force (200), la tension électrique (V_{S}) de l'au moins une ligne de communication (212) est mesurée au moins une fois à l'aide d'un capteur de tension (SENS), et de cette manière au moins une valeur de mesure (M) est générée, **en ce que** l'au moins une valeur de mesure (M) et/ou les résultats traités (R) de celle-ci sont transmis au terminal (206) et/ou au moyen de communication (248) d'un autre module de mesure de force (244) par le biais de l'au moins une ligne de communication (212), et **en ce qu'**un paramètre de l'état du dispositif de mesure de force (200) est ainsi déterminé.

2. Procédé selon la revendication 1, **caractérisé en ce que** les signaux de communication (C) sont transmis au moyen d'un système de bus, en particulier au moyen d'un système de bus CAN.

3. Procédé selon la revendication 1 ou 2, **caractérisé en ce que** pendant le fonctionnement, il est prévu un intervalle de mesure (T_{M}) pendant lequel la communication (C) entre le terminal (206) et le moyen de communication (248) et/ou entre les moyens de communication (248) d'au moins deux modules de mesure de force (244) est interrompue et la tension électrique (Vs) est mesurée.

4. Procédé selon l'une des revendications 2 à 3, **caractérisé en ce que** pendant la mesure de la tension électrique (Vs), la ligne de communication (212) reçoit au moins une tension de test (V_{T}).

5. Procédé selon l'une des revendications 1 à 4, **caractérisé en ce qu'**une tension de test (V_{T}) est appliquée à la ligne de communication (212) à travers le terminal (206) et/ou à travers le moyen de communication (248), le cas échéant de façon commandée à travers le terminal (206).

6. Procédé selon l'une des revendications 1 à 5, **caractérisé en ce qu'**un dysfonctionnement survenu ou attendu de l'au moins un module de mesure de force (244), en particulier l'apparition d'un court-circuit, est reconnu(e) par le moyen de communication (248), **en ce que** le moyen de communication (248) est alors séparé de la ligne de communication (212) et la détermination du résultat de mesure est réalisée avec des valeurs de mesure estimées et/ou interpolées et/ou extrapolées, le cas échéant avec l'émission d'un avertissement.

7. Procédé selon l'une des revendications 1 à 6, **caractérisé en ce que** le procédé de mesure est coordonné par le terminal (206) ou par le moyen de communication (248), en particulier **en ce que** des ordres de commande pour l'instant (t1) de l'arrêt des signaux de communication (C) et/ou pour l'instant (t2, t3, t4) de l'application d'une tension de test (V_{T}) et/ou de la mesure de la tension (Vs) de l'au moins une ligne de communication (212) et/ou pour l'instant (t5) de la poursuite des signaux de communication (C) et/ou de transmission des valeurs de mesure (M) et/ou des résultats traités (R) de celles-ci sont générés par le terminal (206) ou par le moyen de communication (248).

8. Procédé selon l'une des revendications 1 à 7, **caractérisé en ce que** la tension (Vs) de la ligne de communication (212) est surveillée, en particulier **en ce que** la valeur de mesure (M) et/ou les résultats traités (R) de celle-ci sont vérifiés quant au respect d'au moins une valeur seuil prédéfinie modifiable, et en particulier **en ce que** des actions, en particulier la transmission de notifications et/ou le recalibrage et/ou l'arrêt du module de mesure de force (244) concerné et/ou l'enregistrement de l'au moins une valeur de mesure (M) et/ou des résultats traités (R) de celle-ci dans une mémoire, sont exécutées en cas de dépassement de l'au moins une valeur seuil.

9. Procédé selon la revendication 8, **caractérisé en ce que** les valeurs seuil sont déterminées à l'aide de calculs théoriques, en particulier en tenant compte des résistances de ligne des liaisons (R_{HR}, R_{IC}), des résistances internes des moyens de communication et des résistances d'arrêt (R_{T}) et/ou au moyen d'au moins une mesure de référence.

10. Procédé selon l'une des revendications 1 à 9, **caractérisé en ce que** pour ce qui est du moyen de communication (248), il est prévu un dispositif de commutation SW permettant de commuter entre un générateur pour un signal de communication, en particulier un contrôleur CAN (CAN-CONT), et un générateur pour au moins une tension de test (V_{T}).

11. Dispositif de mesure de force (200), en particulier un dispositif de pesage, avec un module de mesure de force (244) présentant une cellule de mesure de force (210) et un moyen de communication (248), avec un terminal (206) et au moins une ligne de communication (212), par laquelle des signaux de communication (C) peuvent être transmis entre le moyen de communication (248) et le terminal (206), **caractérisé en ce que** le module de mesure de force (244) comprend un capteur de tension (SENS) permettant de mesurer la tension électrique (V_{S}) de l'au moins une ligne de communication (212) pendant le fonctionnement, **en ce que** l'au moins une valeur de mesure et/ou les résultats traités de celle-ci peuvent être transmis au terminal (206) par le biais de l'au moins une ligne de communication (212), et **en ce que** l'état du dispositif de mesure de force (200) peut ainsi être déterminé.

12. Dispositif de mesure de force (200) selon la revendication 11, **caractérisé en ce qu'**il est prévu au moins deux lignes de communication (212) entre le terminal (206) et le moyen de communication (248), celles-ci étant conçues comme un système de bus, en particulier comme des lignes de communication (CAN_H, CAN_L) pour un système de bus CAN.

13. Dispositif de mesure de force (200) selon la revendication 11 ou 12, **caractérisé en ce qu'**au moins deux modules de mesure de force (244) sont reliés directement l'un à l'autre au moyen d'un câble de liaison de module servant au transfert de la communication.

14. Dispositif de mesure de force (200) selon l'une des revendications 11 à 13, **caractérisé en ce que** le module de mesure de force (244) présente respectivement un dispositif pour la détermination et/ou la surveillance de la tension électrique de l'alimentation en courant, en particulier de la tension positive (Vs+) et/ou de la tension négative (Vs-), le cas échéant par rapport à un potentiel commun, en particulier un potentiel de masse (GND).

15. Dispositif de mesure de force (200) selon l'une des revendications 11 à 14, **caractérisé en ce que** tous les câbles de liaison de module présentent une résistance de ligne (R_{IC}) majoritairement identique, en particulier une longueur, des matériaux et des sections transversales de ligne majoritairement identiques.

16. Dispositif de mesure de force (200) selon l'une des revendications 11 à 15, **caractérisé en ce que** pour ce qui est du moyen de communication (248), il est prévu un dispositif de commutation SW permettant de commuter entre un générateur pour un signal de communication, en particulier un contrôleur CAN (CAN-CONT), et un générateur pour au moins une tension de test (V_{T}).
